# EUROPEAN PATENT APPLICATION

(11) **EP 4 703 225 A1**
(43) Date of publication of application: **04.03.2026**
(21) Application number: 24722078.3
(22) Date of filing: 27.03.2024
(51) Int. Cl.: B60W 30/16, B60W 30/18, B60W 50/14

(54) **CONTROL DEVICE AND CONTROL METHOD**

(30) Priority: 24.04.2023 JP 2023070963
(71) Applicant: Robert Bosch GmbH, 70442 Stuttgart (DE)
(72) Inventor: HIRAKURI, Kazuhiko, Yokohama-shi, Kanagawa 224-8501 (JP)
(74) Representative: Isarpatent
(86) International application number: PCT/IB2024/052925
(87) International publication number: WO 2024/224186

(57) **Abstract**

The invention provides a control device and a control method that can improve safety of a lean vehicle.

In a control device (20) and a control method according to the invention, an execution section of the control device (20) executes a positional relationship adjustment operation that adjusts a positional relationship between the lean vehicle (1) and a target so that the positional relationship becomes a target positional relationship based on surrounding environment information of the lean vehicle (1), and the execution section sequentially executes, in the positional relationship adjustment operation, a stop phase in which the lean vehicle (1) is automatically decelerated and stopped, and a start phase in which the lean vehicle (1) is caused to perform automatic start when a start trigger signal is acquired, and changes the start phase based on start resistance information.

## Description

### Technical Field

This disclosure relates to a control device and a control method that can improve safety of a lean vehicle.

### Background Art

In recent years, various techniques have been proposed to assist a rider in driving a lean vehicle such as a motorcycle. For example, PTL 1 discloses a driver support system that warns a motorcycle rider that he or she is inappropriately approaching an obstacle based on information detected by a sensor device that detects an obstacle in a traveling direction or a substantially traveling direction.

### Citation List

### Patent Literature

PTL 1: JP2009-116882A

### Summary of Invention

### Technical Problem

By the way, as a technique for supporting driving of a vehicle, there is a positional relationship adjustment operation that adjusts a positional relationship between a vehicle and a target (for example, a target vehicle) so that the positional relationship becomes a target positional relationship. Further, in the positional relationship adjustment operation, there is a technique that automatically decelerates and stops the vehicle and causes the vehicle to perform automatic start when a start trigger signal is acquired. It is also conceivable to apply such a positional relationship adjustment operation to a lean vehicle. Here, in a lean vehicle, a vehicle body posture changes more easily than in a four-wheeled vehicle, and thus vehicle body behavior tends to become unstable with automatic start. Therefore, it is desirable to improve safety of a lean vehicle.

This invention is made against background of the problem described above, and aims to provide a control device and a control method that can improve safety of a lean vehicle.

### Solution to Problem

A control device according to the invention is a control device that controls behavior of a lean vehicle, the control device including an execution section that executes a positional relationship adjustment operation that adjusts a positional relationship between the lean vehicle and a target so that the positional relationship becomes a target positional relationship based on surrounding environment information of the lean vehicle, where the execution section sequentially executes, in the positional relationship adjustment operation, a stop phase in which the lean vehicle is automatically decelerated and stopped, and a start phase in which the lean vehicle is caused to perform automatic start when a start trigger signal is acquired, and changes the start phase based on start resistance information.

A control method according to the invention is a control method for controlling behavior of a lean vehicle, where an execution section of a control device executes a positional relationship adjustment operation that adjusts a positional relationship between the lean vehicle and a target so that the positional relationship becomes a target positional relationship based on surrounding environment information of the lean vehicle, and the execution section sequentially executes, in the positional relationship adjustment operation, a stop phase in which the lean vehicle is automatically decelerated and stopped, and a start phase in which the lean vehicle is caused to perform automatic start when a start trigger signal is acquired, and changes the start phase based on start resistance information. Advantageous Effects of Invention

In the control device and the control method according to the invention, the execution section of the control device executes the positional relationship adjustment operation that adjusts the positional relationship between the lean vehicle and the target so that the positional relationship becomes the target positional relationship based on the surrounding environment information of the lean vehicle, and the execution section sequentially executes, in the positional relationship adjustment operation, the stop phase in which the lean vehicle is automatically decelerated and stopped, and the start phase in which the lean vehicle is caused to perform automatic start when the start trigger signal is acquired, and changes the start phase based on the start resistance information. Thereby, the start phase can be optimized depending on resistance to start of the lean vehicle. Therefore, safety of the lean vehicle can be improved.

### Brief Description of Drawings

Fig. 1 is a schematic diagram illustrating a schematic configuration of a lean vehicle according to an embodiment of the invention.
Fig. 2 is a block diagram illustrating an example of a functional configuration of a control device according to the embodiment of the invention.
Fig. 3 is a flowchart illustrating an example of flow of a first process performed by the control device according to the embodiment of the invention.
Fig. 4 is a flowchart illustrating an example of flow of a second process performed by the control device according to the embodiment of the invention.
Fig. 5 is a diagram for illustrating a third process performed by the control device according to the embodiment of the invention.
Fig. 6 is a diagram for illustrating a fourth process performed by the control device according to the embodiment of the invention.

### Description of Embodiments

Below, a control device and a control method according to the invention will be described using drawings.

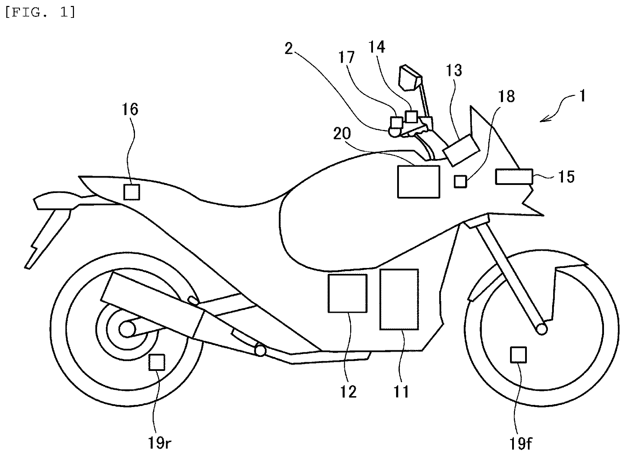

In addition, although the following describes a control device used for a two-wheeled motorcycle (see a lean vehicle 1 in Fig. 1), a vehicle to be controlled by the control device according to the invention may be a lean vehicle, and may be a lean vehicle other than a two-wheeled motorcycle. A lean vehicle refers to a vehicle of which a body leans to the right when turning to the right, and of which the body leans to the left when turning to the left. Examples of the lean vehicle include a motorcycle (two-wheeled motor vehicle, three-wheeled motor vehicle), and a bicycle. A motorcycle includes a vehicle that uses an engine as a power source, a vehicle that uses an electric motor as a power source, and the like. A motorcycle includes, for example, a motorbike, a scooter, an electric scooter, and the like. A bicycle refers to a vehicle that can be propelled on a road by rider's pedaling force applied to a pedal. A bicycle includes a regular bicycle, an electrically assisted bicycle, an electric bicycle, and the like.

Further, in the following, a case will be described in which an engine (specifically, an engine 11 in Fig. 1, which will be described below) is installed as a drive source capable of outputting power for driving a drive wheel. However, a drive source (for example, an electric motor) other than the engine may be installed as the drive source, or a plurality of drive sources may be installed.

Also, in the following, a case is described in which a control unit (specifically, a hydraulic pressure control unit 12 in Fig. 1, which will be described below) that controls hydraulic pressure of brake fluid is adopted as a control unit for a braking force generated in a wheel. However, as a control unit for the braking force generated in the wheel, a control unit (so-called brake-by-wire) that controls a position of a brake part itself of the wheel using an electrical signal may be adopted.

Further, configuration, operation, and the like described below are merely examples, and the control device and control method according to the invention are not limited to such configuration, operation, and the like.

Further, in the following, the same or similar descriptions are simplified or omitted as appropriate. Also, in each figure, for identical or similar members or parts, reference signs are omitted or the same reference signs are used. Further, for detailed structures, illustrations are simplified or omitted as appropriate.

### <Configuration of Lean Vehicle>

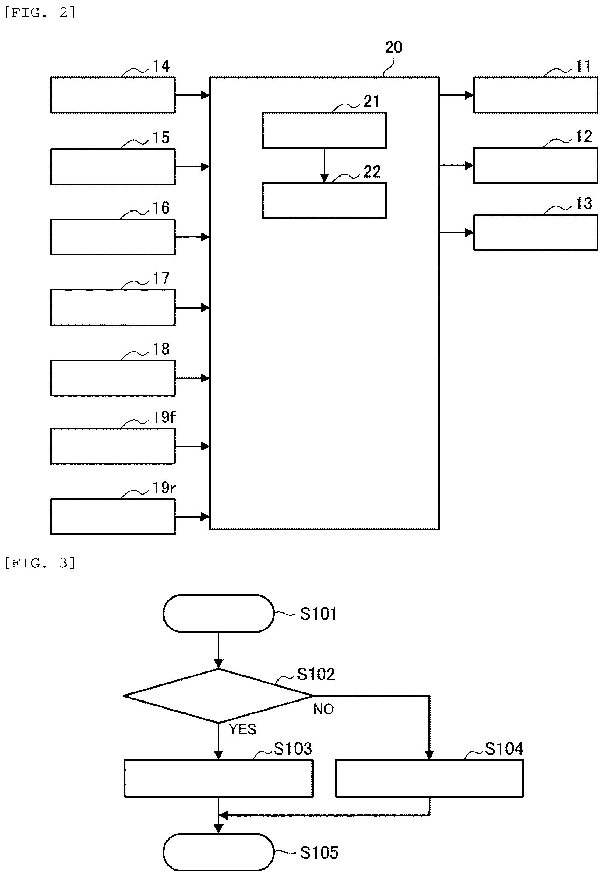

A configuration of the lean vehicle 1 according to an embodiment of the invention will be described with reference to Figs. 1 and 2.

Fig. 1 is a schematic diagram illustrating a schematic configuration of the lean vehicle 1. The lean vehicle 1 is a two-wheeled motorcycle corresponding to an example of a lean vehicle according to the invention. As illustrated in Fig. 1, the lean vehicle 1 includes a handlebar 2, the engine 11, the hydraulic pressure control unit 12, a display device 13, an input device 14, a surrounding environment sensor 15, an inertial measurement unit (IMU) 16, a grip force sensor 17, a steering angle sensor 18, a front wheel speed sensor 19f, a rear wheel speed sensor 19r, and a control device (ECU) 20. The lean vehicle 1 is a vehicle that cannot stand on its own in a stopped state. In other words, when the lean vehicle 1 is in the stopped state, an upright state is maintained by a rider supporting the vehicle by placing his or her feet on a road surface. The lean vehicle 1 may be a vehicle that can stand on its own in the stopped state.

The engine 11 corresponds to an example of a drive source of the lean vehicle 1, and can output power for driving a drive wheel (specifically, a rear wheel). For example, the engine 11 is provided with one or more cylinders each having a combustion chamber formed therein, a fuel injection valve that injects fuel toward the combustion chamber, and a spark plug. When fuel is injected from the fuel injection valve, an air-fuel mixture containing air and fuel is formed in the combustion chamber, and the air-fuel mixture is ignited by the spark plug and combusts. As a result, a piston provided in the cylinder reciprocates, causing a crankshaft to rotate. Further, a throttle valve is provided in an intake pipe of the engine 11, and an amount of air taken into the combustion chamber changes depending on a throttle opening, which is the opening of the throttle valve.

The hydraulic pressure control unit 12 is a unit that has a function of controlling the braking force generated in the wheel. For example, the hydraulic pressure control unit 12 is provided on an oil path connecting a master cylinder and a wheel cylinder, and includes components (for example, a control valve and a pump) for controlling the brake hydraulic pressure of the wheel cylinder. By controlling an operation of the components of the hydraulic pressure control unit 12, the braking force generated in the wheel is controlled. The hydraulic pressure control unit 12 may control respective braking forces generated on both the front wheel and the rear wheel, or may control only a braking force generated on one of the front wheel and the rear wheel.

The display device 13 has a display function that visually displays information. Examples of the display device 13 include a liquid crystal display. The display device 13 is provided, for example, in front of the handlebar 2 in the lean vehicle 1. However, an arrangement of the display device 13 with respect to a vehicle body is not particularly limited.

The input device 14 accepts various operations by the rider. The input device 14 includes, for example, a push button provided on the handlebar 2 and used for an operation by the rider. Information regarding the operation by the rider using the input device 14 is output to the control device 20.

The surrounding environment sensor 15 detects surrounding environment information regarding environment around the lean vehicle 1. Specifically, the surrounding environment sensor 15 is provided at the front of the lean vehicle 1 and detects surrounding environment information in front of the lean vehicle 1. The surrounding environment information detected by the surrounding environment sensor 15 is output to the control device 20.

The surrounding environment information detected by the surrounding environment sensor 15 may be information (for example, a relative position, a relative distance, relative velocity, relative acceleration) related to the distance or direction to a subject located around the lean vehicle 1, or may be characteristics (for example, a type of the subject, a shape of the subject itself, a mark attached to the subject) of the subject located around the lean vehicle 1. The surrounding environment sensor 15 is, for example, a radar, a lidar sensor, an ultrasonic sensor, and a camera.

The surrounding environment information can also be detected by a surrounding environment sensor mounted on another vehicle or by infrastructure equipment. That is, the control device 20 can also acquire surrounding environment information through wireless communication with other vehicles or infrastructure equipment.

The inertial measurement unit 16 includes a three-axis gyro sensor and a three-direction acceleration sensor, and detects an attitude of the lean vehicle 1. The inertial measurement unit 16 is provided in a body of the lean vehicle 1, for example. For example, the inertial measurement unit 16 detects a roll angle of the lean vehicle 1 and outputs the detection result. The inertial measurement unit 16 may detect other physical quantities that can be substantially converted into the roll angle of the lean vehicle 1. The roll angle corresponds to an angle representing an inclination of the vehicle body (specifically, the body) of the lean vehicle 1 in a roll direction with respect to a vertically upward direction. The inertial measurement unit 16 may include only parts of the three-axis gyro sensor and three-direction acceleration sensor.

The grip force sensor 17 is provided on the handlebar 2 and detects a gripping force that is a force with which the rider grips the handlebar 2.

The steering angle sensor 18 detects a steering angle of the lean vehicle 1. For example, the steering angle sensor 18 detects a steering angle of the handlebar 2 as the steering angle of the lean vehicle 1. The steering angle of the lean vehicle 1 is, for example, an angle between a front direction of the vehicle body of the lean vehicle 1 and a front direction of the handlebar 2. The steering angle of the lean vehicle 1 may also mean a steering angle of a tire.

The front wheel speed sensor 19f is a wheel speed sensor that detects the wheel speed (for example, the number of rotations per unit time [rpm] of the front wheel or the moving distance per unit time [km/h]) of the front wheel, and outputs the detection result. The front wheel speed sensor 19f may detect other physical quantities that can be substantially converted into the wheel speed of the front wheel. The front wheel speed sensor 19f is provided on the front wheel.

The rear wheel speed sensor 19r is a wheel speed sensor that detects the wheel speed (for example, the number of rotations per unit time [rpm] of the rear wheel or the moving distance per unit time [km/h]) of the rear wheel, and outputs the detection result. The rear wheel speed sensor 19r may detect other physical quantities that can be substantially converted into the wheel speed of the rear wheel. The rear wheel speed sensor 19r is provided on the rear wheel.

The control device 20 controls behavior of the lean vehicle 1. For example, part or all of the control device 20 includes a microcomputer, a microprocessor unit, a memory, and the like. Further, for example, a part or all of the control device 20 may be configured with something that can be updated, such as firmware, or may be a program module or the like that is executed by a command from a CPU or the like. For example, the control device 20 may be one, or may be divided into a plurality of units.

Fig. 2 is a block diagram illustrating an example of a functional configuration of the control device 20. As illustrated in Fig. 2, the control device 20 includes, for example, an acquisition section 21 and an execution section 22. The control device 20 also communicates with each device of the lean vehicle 1.

The acquisition section 21 acquires information from each device of the lean vehicle 1 and outputs it to the execution section 22. For example, the acquisition section 21 acquires information from the input device 14, the surrounding environment sensor 15, the inertial measurement unit 16, the grip force sensor 17, the steering angle sensor 18, the front wheel speed sensor 19f, and the rear wheel speed sensor 19r. In this specification, acquiring information may include extracting or generating (for example, calculating) information, and the like.

The execution section 22 executes various controls by controlling operations of each device of the lean vehicle 1. The execution section 22 controls, for example, operations of the engine 11, the hydraulic pressure control unit 12, and the display device 13.

Here, the execution section 22 can execute a positional relationship adjustment operation based on the surrounding environment information of the lean vehicle 1. The positional relationship adjustment operation is an operation for adjusting a positional relationship between the lean vehicle 1 and a target (for example, a target vehicle) so that the positional relationship becomes a target positional relationship. Specifically, in the positional relationship adjustment operation, the execution section 22 can adjust the positional relationship between the lean vehicle 1 and the target so that the target positional relationship is achieved by automatically controlling the speed of the lean vehicle 1. In addition, although an example in which the above-mentioned target is a target vehicle will be mainly described below, the above-mentioned target is not limited to the target vehicle, and may be a stop line, a traffic light, or the like.

An example in which adaptive cruise control is executed as a positional relationship adjustment operation will be described below. However, the positional relationship adjustment operation may be any operation that adjusts the positional relationship between the lean vehicle 1 and the target so that the positional relationship becomes the target positional relationship, and may be an operation other than adaptive cruise control. For example, the positional relationship adjustment operation may be an operation that is not canceled even when the rider performs an accelerator operation, and the target positional relationship changes depending on an amount of the accelerator operation.

In the adaptive cruise control, the execution section 22 automatically controls the speed of the lean vehicle 1 without depending on the rider's acceleration/deceleration operations (that is, accelerator operation and brake operation). The execution section 22 can control the speed of the lean vehicle 1, for example, based on information on the speed of the lean vehicle 1 acquired based on the wheel speed of the front wheel and the wheel speed of the rear wheel.

In the adaptive cruise control, for example, a target inter-vehicle distance is set, which is a target value of an inter-vehicle distance between the lean vehicle 1 and a target vehicle, and the execution section 22 controls the speed of the lean vehicle 1 so that the inter-vehicle distance between the lean vehicle 1 and the target vehicle becomes the target inter-vehicle distance. In other words, the positional relationship in which the inter-vehicle distance between the lean vehicle 1 and the target vehicle becomes the target inter-vehicle distance corresponds to the target positional relationship. The inter-vehicle distance may mean a distance in a direction along a lane (specifically, a driving lane of the lean vehicle 1), or may mean a straight-line distance. For example, the acquisition section 21 acquires the inter-vehicle distance between the lean vehicle 1 and the target vehicle based on the surrounding environment information of the lean vehicle 1, and the execution section 22 can control the speed of the lean vehicle 1 as described above based on the inter-vehicle distance thus acquired.

However, in the adaptive cruise control, for example, a target passing time difference that is a target value of a passing time difference (specifically, the time it takes for the lean vehicle 1 to pass a current position of the target vehicle from the current time) is set, and the execution section 22 may control the speed of the lean vehicle 1 so that the passing time difference becomes the target passing time difference. In this case, a positional relationship in which the passing time difference becomes the target passing time difference corresponds to the target positional relationship. For example, the acquisition section 21 acquires the passing time difference based on the surrounding environment information of the lean vehicle 1, and the execution section 22 can control the speed of the lean vehicle 1 as described above based on the passing time difference thus acquired.

The execution section 22 starts adaptive cruise control when, for example, an operation by the rider using the input device 14 is triggered. The adaptive cruise control is canceled, for example, when the rider performs a specific operation such as a brake operation.

Here, as the positional relationship adjustment operation, an operation that is canceled when the speed of the lean vehicle 1 decreases and falls below a reference speed may be used. On the other hand, in the embodiment of the invention, the positional relationship adjustment operation executed by the execution section 22 is an operation that is not canceled due to the decrease in speed as described above. Therefore, in the positional relationship adjustment operation according to the embodiment of the invention, the execution section 22 can automatically stop and start the lean vehicle 1.

In the adaptive cruise control, for example, the execution section 22 sequentially executes a stop phase in which the lean vehicle 1 is automatically decelerated and stopped, and a start phase in which the lean vehicle 1 is caused to perform automatic start when a start trigger signal is acquired.

In the stop phase, the lean vehicle 1 automatically stops. In the stop phase, the execution section 22 automatically decelerates and stops the lean vehicle 1 based on the surrounding environment information of the lean vehicle 1, for example. For example, when the target vehicle decelerates and stops, the execution section 22 automatically decelerates and stops the lean vehicle 1 based on the surrounding environment information of the lean vehicle 1 so that the inter-vehicle distance between the lean vehicle 1 and the target vehicle is maintained at the target inter-vehicle distance.

However, in the stop phase, the execution section 22 may automatically decelerate and stop the lean vehicle 1 without being based on the surrounding environment information of the lean vehicle 1. For example, the execution section 22 may automatically decelerate and stop the lean vehicle 1 when a specific operation is performed by the rider using the input device 14.

In addition, from the viewpoint of suppressing movement (for example, sliding down due to its own weight) of the lean vehicle 1 while it is stopped, preferably, the execution section 22 executes brake maintenance control in which a state in which a braking force is automatically applied to the stopped lean vehicle 1 is maintained. The execution section 22 can control the braking force applied to the lean vehicle 1 by, for example, controlling the operation of the hydraulic pressure control unit 12 in the brake maintenance control.

In the start phase, the lean vehicle 1 starts automatically. In the start phase, the execution section 22 acquires a start trigger signal based on the surrounding environment information of the lean vehicle 1, for example, and causes the lean vehicle 1 to automatically start in response to the acquisition of the start trigger signal. For example, when a stopped target vehicle starts, a start trigger signal is acquired based on the surrounding environment information of the lean vehicle 1, and the execution section 22 causes the lean vehicle 1 to automatically start so that the inter-vehicle distance between the lean vehicle 1 and the target vehicle is maintained at the target inter-vehicle distance.

However, the execution section 22 may acquire the start trigger signal in the start phase without being based on the surrounding environment information of the lean vehicle 1. For example, the execution section 22 may acquire a start trigger signal when a specific operation is performed by the rider using the input device 14. Further, the execution section 22 may acquire a start trigger signal when the rider performs an acceleration operation (for example, an operation of rotating an accelerator grip toward an acceleration side).

### <Operation of Control Device>

An operation of the control device 20 according to the embodiment of the invention will be described with reference to Figs. 3 to 6.

As described above, in the adaptive cruise control, the control device 20 sequentially executes the stop phase in which the lean vehicle 1 is automatically decelerated and stopped, and the start phase in which the lean vehicle 1 is caused to perform automatic start in response to acquisition of a start trigger signal. Here, in the lean vehicle 1, a vehicle body posture changes more easily than in a four-wheeled vehicle, and thus the vehicle body behavior tends to become unstable with automatic start. The instability of the vehicle body behavior due to automatic start may be a factor that reduces the safety of the lean vehicle 1.

Therefore, in the embodiment of the invention, the execution section 22 of the control device 20 changes the start phase based on start resistance information. Thereby, as will be described below, it is possible to improve the safety of the lean vehicle 1. The start resistance information is information regarding resistance (hereinafter, also referred to as start resistance.) to the start of the lean vehicle 1, and may be information regarding the resistance of the lean vehicle 1, or may be information regarding the resistance of the rider of the lean vehicle 1. The start resistance means, for example, resistance (for example, resistance to stably start the lean vehicle 1 without overturning it) to instability of the vehicle body behavior as the lean vehicle 1 starts. Details of the start resistance information will be described below. Hereinafter, among processes performed by the control device 20, a first process, a second process, a third process, and a fourth process will be described in order as examples of processes for changing the start phase based on the start resistance information.

Fig. 3 is a flowchart illustrating an example of flow of the first process performed by the control device 20. Step S101 in Fig. 3 corresponds to the start of control flow illustrated in Fig. 3. Step S105 in Fig. 3 corresponds to the end of the control flow illustrated in Fig. 3. The control flow illustrated in Fig. 3 is repeatedly executed at set time intervals, for example, in the stop phase.

When the control flow illustrated in Fig. 3 is started, in step S102, the execution section 22 determines whether the start resistance is higher than a reference based on the start resistance information.

As described above, the start resistance information is information regarding the resistance of the lean vehicle 1 to start. For example, the acquisition section 21 acquires start resistance information, and step S102 is performed using the start resistance information acquired by the acquisition section 21. The reference in step S102 is set, for example, to determine how unstable the vehicle body behavior or the rider of the lean vehicle 1 is likely to be when automatic start is performed. When the start resistance is higher than the reference, this corresponds to a case where it is assumed that the vehicle body behavior or the rider of the lean vehicle 1 will not become very unstable even when automatic start is performed. On the other hand, when the start resistance is lower than the reference, this corresponds to a case where the vehicle body behavior or the rider of the lean vehicle 1 is likely to become unstable when automatic start is performed.

As described above, the start resistance information may include a variety of pieces of information as long as it is information that can determine how unstable the vehicle body behavior or the rider of the lean vehicle 1 is likely to be when automatic start is performed.

For example, the start resistance information may include vehicle body posture information of the lean vehicle 1. The vehicle body posture information is information regarding the vehicle body posture of the lean vehicle 1, and may include, for example, leaning state information on the lean vehicle 1.

The leaning state information is information regarding a leaning state in which the lean vehicle 1 leans in a roll direction. For example, the leaning state information is information indicating whether the lean vehicle 1 is leaning in the roll direction or information indicating how far the lean vehicle 1 is leaning in the roll direction.

For example, the acquisition section 21 may acquire the leaning state information based on roll angle information of the lean vehicle 1. The roll angle information is information regarding the roll angle of the lean vehicle 1. For example, the roll angle information is information indicating a value of the roll angle, rough information expressing the degree of the roll angle in several stages, information indicating a value of a change rate of the roll angle, rough information expressing the degree of a change rate of the roll angle in several stages, or information that can be practically converted into such information. For example, the acquisition section 21 can acquire roll angle information based on the detection result of the inertial measurement unit 16. The acquisition section 21 may acquire the roll angle information by, for example, performing image processing on an image of the road surface obtained by a camera mounted on the lean vehicle 1.

In the case where the leaning state information is acquired as the start resistance information based on the roll angle information, in step S102, for example, the execution section 22 determines that the start resistance is higher than the reference when the roll angle is smaller than a reference roll angle. On the other hand, when the roll angle is larger than the reference roll angle, the execution section 22 determines that the start resistance is lower than the reference. The above-described reference roll angle is set so as to be able to determine how unstable the vehicle body behavior of the lean vehicle 1 is likely to be when automatic start is performed.

Further, for example, the acquisition section 21 may acquire the leaning state information based on lateral acceleration information of the lean vehicle 1. The lateral acceleration information is information regarding lateral acceleration of the lean vehicle 1. For example, the lateral acceleration information is information indicating a value of lateral acceleration, rough information expressing the degree of lateral acceleration in several stages, information indicating a value of a change rate of lateral acceleration, rough information expressing the degree of a change rate of lateral acceleration in several stages, or information that can be practically converted into such information. For example, the acquisition section 21 can acquire lateral acceleration information based on the detection result of the inertial measurement unit 16.

In the case where the leaning state information is acquired as the start resistance information based on the lateral acceleration information, in step S102, for example, the execution section 22 determines that the start resistance is higher than the reference when the lateral acceleration is smaller than the reference lateral acceleration. On the other hand, when the lateral acceleration is greater than reference lateral acceleration, the execution section 22 determines that the start resistance is lower than the reference. The above-described reference lateral acceleration is set so as to be able to determine how unstable the vehicle body behavior of the lean vehicle 1 is likely to be when automatic start is performed.

Further, for example, the acquisition section 21 may acquire the leaning state information based on steering angle information of the lean vehicle 1. The steering angle information is information regarding the steering angle of the lean vehicle 1. For example, the steering angle information is information indicating a value of a steering angle, rough information expressing the degree of the steering angle in several stages, information indicating a value of a change rate of the steering angle, rough information expressing the degree of a change rate of the steering angle in several stages, or information that can be practically converted into such information. For example, the acquisition section 21 can acquire steering angle information based on a detection result of the steering angle sensor 18. When the lean vehicle 1 is stopped in a state where the lean vehicle 1 leans in the roll direction, the steering angle of the lean vehicle 1 becomes large to some extent. Therefore, the acquisition section 21 can estimate the leaning state information using the steering angle information.

In the case where the leaning state information is acquired as the start resistance information based on the steering angle information, in step S102, for example, the execution section 22 determines that the start resistance is higher than the reference when the steering angle is smaller than the reference steering angle. On the other hand, when the steering angle is larger than the reference steering angle, the execution section 22 determines that the start resistance is lower than the reference. The above-described reference steering angle is set so as to be able to determine how unstable the vehicle body behavior of the lean vehicle 1 is likely to be when automatic start is performed.

In the above, an example is described in which the steering angle information is used for estimating the leaning state information. However, when the lean vehicle 1 is stopped, the steering angle may increase to some extent even though the lean vehicle 1 has not leaned in the roll direction. Therefore, the acquisition section 21 may acquire the steering angle information as vehicle body posture information instead of using it for estimating the leaning state information.

In the case where the lean vehicle 1 is not leaning in the roll direction and the steering angle information is acquired as vehicle posture information (and by extension, as start resistance information), in step S102, for example, when the steering angle is smaller than the reference steering angle, the execution section 22 determines that the start resistance is higher than the reference. On the other hand, when the steering angle is larger than the reference steering angle, the execution section 22 determines that the start resistance is lower than the reference.

In the above, leaning state information and steering angle information are described as examples of vehicle body posture information. However, information other than the information explained above may be used as the vehicle body posture information. For example, pitch angle information of the lean vehicle 1 may be used as the vehicle body posture information. The pitch angle information is information regarding the pitch angle of the lean vehicle 1. For example, the pitch angle information is information indicating a value of a pitch angle, rough information expressing the degree of the pitch angle in several stages, information indicating a value of a change rate of the pitch angle, rough information expressing the degree of a change rate of the pitch angle in several stages, or information that can be practically converted into such information. For example, the acquisition section 21 can acquire pitch angle information based on a detection result of the inertial measurement unit 16. For example, when the pitch angle is larger than a reference pitch angle due to, for example, a large amount of luggage being loaded on the lean vehicle 1, the execution section 22 can determine that the start resistance is lower than the reference.

Further, for example, the start resistance information may include riding state information of the rider of the lean vehicle 1. The riding state information is information regarding a riding state of the rider of the lean vehicle 1. For example, the riding state information may include grip state information of the handlebar 2 of the lean vehicle 1 by the rider of the lean vehicle 1, posture information of the rider of the lean vehicle 1, and the like.

The grip state information is information regarding the grip state of the handlebar 2 of the lean vehicle 1 by the rider. For example, the grip state information is information indicating a value of a gripping force relating to the handlebar 2 by the rider, rough information expressing the degree of the gripping force in several stages, information that can be practically converted into such information, or information indicating whether the handlebar 2 is being gripped by the rider. For example, the acquisition section 21 can acquire the grip state information based on a detection result of the grip force sensor 17.

In the case where the grip state information is acquired as the start resistance information, in step S102, for example, the execution section 22 determines that the start resistance is higher than the reference when the handlebar 2 is gripped by the rider. On the other hand, when the handlebar 2 is not gripped by the rider, the execution section 22 determines that the start resistance is lower than the reference. Further, for example, when the gripping force relating to the handlebar 2 by the rider is greater than the reference gripping force, the execution section 22 determines that the start resistance is higher than the reference. On the other hand, when the gripping force relating to the handlebar 2 by the rider is smaller than the reference gripping force, the execution section 22 determines that the start resistance is lower than the reference. The above-mentioned reference gripping force is set so as to be able to determine how unstable the rider of the lean vehicle 1 is likely to be when automatic start is performed.

The posture information is information related to the rider's posture, and is, for example, information indicating an orientation of the rider's head. The acquisition section 21 can acquire posture information using various sensors. For example, the acquisition section 21 may acquire posture information based on a detection result of a camera mounted on the lean vehicle 1 that images each part of the rider. Also, for example, the acquisition section 21 may acquire posture information (for example, information indicating the orientation of the rider's head) regarding the posture of the rider's head based on a detection result of an inertial measurement unit mounted on rider's helmet. Further, for example, the acquisition section 21 may acquire posture information based on a detection result of a sensor (for example, a seating sensor) mounted on the lean vehicle 1 and capable of detecting contact with various parts of the rider.

In the case where posture information is acquired as start resistance information, in step S102, for example, the execution section 22 determines that the start resistance is higher than the reference when an angle formed by the front direction of the vehicle body of the lean vehicle 1 and the orientation of the rider's head is smaller than a reference angle. On the other hand, the execution section 22 determines that the start resistance is lower than the reference when the angle formed by the front direction of the vehicle body of the lean vehicle 1 and the orientation of the rider's head is larger than the reference angle. The above-mentioned reference angle is set so as to be able to determine how unstable the rider of the lean vehicle 1 is likely to be when automatic start is performed.

Various examples of the start resistance information are described above. However, the start resistance information may be information other than the examples listed above. Further, a plurality of types of information may be used together as the start resistance information. For example, a plurality of types of information arbitrarily selected from the examples listed above may be used together as the start resistance information.

When it is determined that the start resistance is higher than the reference (step S102 / YES), the process proceeds to step S103. Then, in step S103, the execution section 22 permits automatic start. On the other hand, when it is determined that the start resistance is lower than the reference (step S102/NO), the process proceeds to step S104. Then, in step S104, the execution section 22 prohibits automatic start. After step S103 or step S104, the control flow in Fig. 3 ends.

Even when automatic start is prohibited in step S104, the adaptive cruise control may not be canceled. In that case, the execution section 22 may suspend the automatic start of the lean vehicle 1 until the start resistance becomes higher than the reference, for example. Also, the execution section 22 may cause the lean vehicle 1 to automatically start using a specific operation performed by the rider as a trigger. It is preferable that the rider be informed that automatic start is prohibited.

As described above, in the first process, the execution section 22 changes whether automatic start can be executed based on the start resistance information in the start phase. Thereby, it is possible to optimize whether automatic start can be executed in the start phase, depending on the resistance to start of the lean vehicle 1. For example, when it is assumed that the vehicle body behavior or the rider of the lean vehicle 1 is likely to become unstable when automatic start is performed, automatic start can be prohibited. Therefore, the safety of the lean vehicle 1 can be improved.

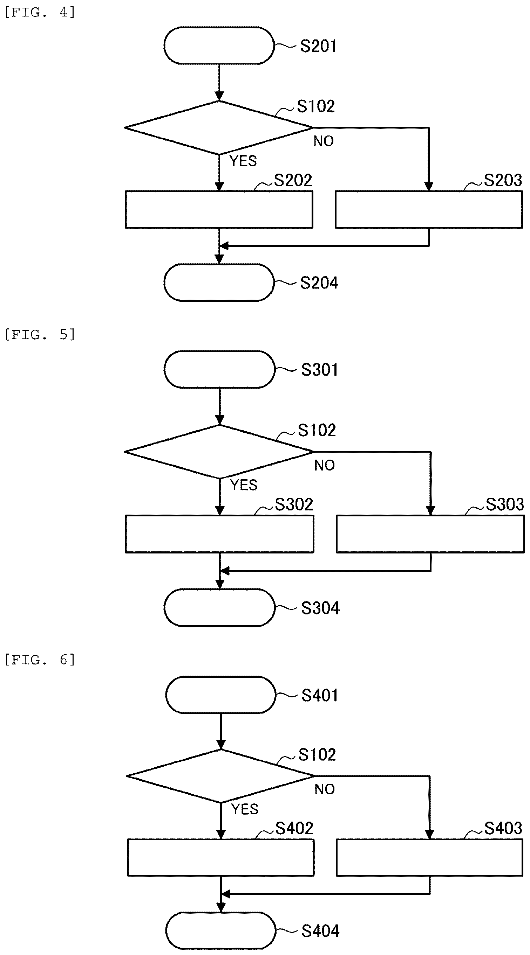

Fig. 4 is a flowchart illustrating an example of flow of the second process performed by the control device 20. Step S201 in Fig. 4 corresponds to the start of control flow illustrated in Fig. 4. Step S204 in Fig. 4 corresponds to the end of the control flow illustrated in Fig. 4. The control flow illustrated in Fig. 4 is repeatedly executed at set time intervals, for example, in the stop phase.

The second process in Fig. 4 differs from the first process in Fig. 3 described above in that step S103 and step S104 are respectively replaced with step S202 and step S203.

In the second process of Fig. 4, when it is determined YES in step S102 (that is, when it is determined that the start resistance is higher than the reference), the process proceeds to step S202. Then, in step S202, the execution section 22 switches a setting of an acceleration characteristic during automatic start to a first setting. On the other hand, when it is determined NO in step S102 (that is, when it is determined that the start resistance is lower than the reference), the process proceeds to step S203. Then, in step S203, the execution section 22 switches the setting of the acceleration characteristic during automatic start to a second setting. It is preferable that the rider be informed that the setting of the acceleration characteristic is switched. After step S202 or step S203, the control flow in Fig. 4 ends.

In adaptive cruise control, the acceleration characteristic for automatic start is set, and automatic start is performed so that the acceleration characteristic of the lean vehicle 1 matches the set characteristic. The acceleration characteristic is a characteristic related to acceleration, and may include, for example, a characteristic of acceleration, or a characteristic of a change rate of acceleration.

The acceleration characteristic set in the first setting is, for example, an acceleration characteristic based on the positional relationship between the lean vehicle 1 and the target vehicle. Examples of such acceleration characteristics include acceleration characteristics in which the inter-vehicle distance between the lean vehicle 1 and the target vehicle is maintained at a target inter-vehicle distance. The acceleration characteristic set in the first setting may be, for example, an acceleration characteristic (for example, an acceleration characteristic in which the acceleration is a fixed value) that is not based on the positional relationship between the lean vehicle 1 and the target vehicle.

For example, in the second setting, at least one of the acceleration and the change rate of the acceleration is smaller than that of the first setting. In other words, when the start resistance is lower than the reference, automatic start is performed so that at least one of the acceleration and the change rate of the acceleration is smaller than when the start resistance is higher than the reference.

As described above, in the second process, the execution section 22 changes the acceleration characteristic of the lean vehicle 1 during automatic start based on the start resistance information in the start phase. Thereby, the acceleration characteristic of the lean vehicle 1 during automatic start can be optimized depending on the resistance to the start of the lean vehicle 1. For example, when it is assumed that the vehicle body behavior or the rider of the lean vehicle 1 is likely to become unstable when automatic start is performed, at least one of the acceleration and the change rate of the acceleration during automatic start can be reduced. Therefore, the safety of the lean vehicle 1 can be improved.

The third process in Fig. 5 and the fourth process in Fig. 6, which will be described below, are processes related to a notification operation in the start phase. The execution section 22 is capable of executing a notification operation to notify the rider of the lean vehicle 1 of automatic start in the start phase. Hereinafter, such a notification operation will also be referred to as a notification operation in the start phase.

The execution section 22 executes the notification operation in the start phase using, for example, the display device 13. However, the notification operation in the start phase is not limited to this example. For example, the execution section 22 may perform the notification operation in the start phase using a display device provided on something (for example, a helmet) worn by the rider. Further, for example, the execution section 22 may perform the notification operation in the start phase using a sound output device provided on the lean vehicle 1 or on something worn by the rider. Further, for example, the execution section 22 may perform the notification operation in the start phase using a vibration generator provided on the lean vehicle 1 or on something worn by the rider. Furthermore, for example, the execution section 22 may perform the notification operation in the start phase by causing the lean vehicle 1 to instantaneously accelerate or decelerate. In this case, the instantaneous acceleration and deceleration may be performed using a drive source (for example, the engine 11) of the lean vehicle 1, may be performed using a control unit (for example, the hydraulic pressure control unit 12) for the braking force generated on the wheel, or may be performed using a transmission mechanism of the lean vehicle 1.

Fig. 5 is a flowchart illustrating an example of flow of the third process performed by the control device 20. Step S301 in Fig. 5 corresponds to the start of control flow illustrated in Fig. 5. Step S304 in Fig. 5 corresponds to the end of the control flow illustrated in Fig. 5. The control flow illustrated in Fig. 5 is repeatedly executed at set time intervals, for example, in the stop phase.

The third process in Fig. 5 differs from the first process in Fig. 3 described above in that step S103 and step S104 are respectively replaced with step S302 and step S303.

In the third process of Fig. 5, when it is determined YES in step S102 (that is, when it is determined that the start resistance is higher than the reference), the process proceeds to step S302. Then, in step S302, the execution section 22 prohibits the notification operation in the start phase. On the other hand, when it is determined NO in step S102 (that is, when it is determined that the start resistance is lower than the reference), the process proceeds to step S303. Then, in step S303, the execution section 22 permits the notification operation in the start phase. After step S302 or step S303, the control flow in Fig. 5 ends.

As described above, in the third process, the execution section 22 changes whether the notification operation for notifying the rider of the lean vehicle 1 of automatic start can be executed in the start phase based on the start resistance information. Thereby, it is possible to optimize whether the notification operation can be executed in the start phase, depending on the resistance to the start of the lean vehicle 1. For example, when it is assumed that the vehicle body behavior or the rider of the lean vehicle 1 will not become very unstable even when automatic start is performed, unnecessary notification operations can be suppressed. On the other hand, when it is assumed that the vehicle body behavior or the rider of the lean vehicle 1 is likely to become unstable when automatic start is performed, the notification operation can be permitted and executed. Therefore, the safety of the lean vehicle 1 can be improved.

Fig. 6 is a flowchart illustrating an example of the flow of the fourth process performed by the control device 20. Step S401 in Fig. 6 corresponds to the start of control flow illustrated in Fig. 6. Step S404 in Fig. 6 corresponds to the end of the control flow illustrated in Fig. 6. The control flow illustrated in Fig. 6 is repeatedly executed at set time intervals, for example, in the stop phase.

The fourth process in Fig. 6 differs from the first process in Fig. 3 described above in that step S103 and step S104 are respectively replaced with step S402 and step S403.

In the fourth process in Fig. 6, when it is determined YES in step S102 (that is, when it is determined that the start resistance is higher than the reference), the process proceeds to step S402. Then, in step S402, the execution section 22 switches the setting of an execution aspect of the notification operation in the start phase to the first setting. On the other hand, when it is determined NO in step S102 (that is, when it is determined that the start resistance is lower than the reference), the process proceeds to step S403. Then, in step S403, the execution section 22 switches the setting of the execution aspect of the notification operation in the start phase to the second setting. After step S402 or step S403, the control flow in Fig. 6 ends.

In adaptive cruise control, the execution aspect of the notification operation in the start phase is set, and the notification operation is performed so that the execution aspect is the set aspect. The execution aspect of the notification operation may include, for example, perceptibility of the notification operation or a time period during which the notification operation continues. The perceptibility of the notification operation means, for example, the ease with which the rider can recognize the notification in the notification operation.

For example, in the second setting, the perceptibility of the notification operation is stronger than in the first setting. That is, when the start resistance is lower than the reference, the notification operation is performed so that the perceptibility becomes stronger than when the start resistance is higher than the reference. For example, when the notification in the notification operation is made by display, the perceptibility of the notification in the notification operation can be made stronger by widening the display range, increasing the display brightness, or changing the display color. For example, when the notification in the notification operation is made by sound, the perceptibility of the notification in the notification operation can be made stronger by increasing the volume of the sound or the pitch of the sound. Further, for example, when the notification in the notification operation is performed by vibration, the perceptibility of the notification in the notification operation can be increased by increasing the strength of the vibration.

As described above, in the fourth process, the execution section 22 changes the execution aspect of the notification operation for notifying the rider of the lean vehicle 1 of automatic start based on the start resistance information in the start phase. Thereby, the execution aspect of the notification operation in the start phase can be optimized depending on the resistance to the start of the lean vehicle 1. For example, when it is assumed that the vehicle body behavior or the rider of the lean vehicle 1 is likely to become unstable when automatic start is performed, the perceptibility of the notification operation can be increased. Therefore, the safety of the lean vehicle 1 can be improved.

In addition, the example in which the perceptibility is different between the second setting and the first setting is described above. However, the second setting and the first setting may be different in execution aspects (for example, the time period during which the notification operation continues) other than perceptibility.

In the above, the first process, second process, third process, and fourth process are described as examples of processes performed by the control device 20. However, the process performed by the control device 20 may be a modification of the process example described above.

For example, in the second process illustrated in Fig. 4, the acceleration characteristic of the lean vehicle 1 during automatic start changes in two stages, but the acceleration characteristic of the lean vehicle 1 during automatic start may change in more steps (that is, in three or more steps) or may change continuously.

Further, for example, in the fourth process illustrated in Fig. 6, the execution aspect of the notification operation in the start phase changes in two stages, but the execution aspect of the notification operation in the start phase may change in more steps (that is, in three or more steps) or may change continuously.

Further, for example, in the above example, the start resistance information is acquired in the stop phase, but the acquisition time of the start resistance information may be the time (for example, immediately after the automatic start starts) other than the stop phase.

Further, for example, in the above, the process (in the above, the first process) of changing whether automatic start can be executed based on the start resistance information, and the process (in the above, the second process) of changing the acceleration characteristic of the lean vehicle 1 in automatic start based on the start resistance information are respectively described. Also, for example, in the above, the process (in the above, the third process) of changing whether the notification operation can be executed in automatic start based on the start resistance information, and the process (in the above, the fourth process) of changing the execution aspect of the notification operation in automatic start based on the start resistance information are respectively described.

A plurality of types of processes arbitrarily selected from these processes may be combined. In other words, there may be a plurality of types of objects that change based on the start resistance information. For example, the execution section 22 may change whether automatic start can be executed based on the start resistance information, and then the execution section 22 may change the acceleration characteristic of the lean vehicle 1 in automatic start based on the start resistance information when automatic start is permitted. Further, for example, the execution section 22 may change whether a notification operation can be executed in automatic start based on the start resistance information, and then the execution section 22 may change the execution aspect of the notification operation in automatic start based on the start resistance information when the notification operation in automatic start is permitted. Further, for example, the execution section 22 may change at least one of whether the automatic start can be executed and the acceleration characteristic of the lean vehicle 1 during the automatic start based on the start resistance information, and then the execution section 22 may change at least one of whether the notification operation in automatic start can be executed and the execution aspect of the notification operation in automatic start, based on the start resistance information.

### <Effect of Control Device>

Effects of the control device 20 according to the embodiment of the invention will be described.

The control device 20 includes the execution section 22 that executes a positional relationship adjustment operation that adjusts a positional relationship between the lean vehicle 1 and the target so that the positional relationship becomes a target positional relationship based on surrounding environment information of the lean vehicle 1. In the positional relationship adjustment operation, the execution section 22 sequentially executes a stop phase in which the lean vehicle 1 is automatically decelerated and stopped, and a start phase in which the lean vehicle 1 is caused to perform automatic start when a start trigger signal is acquired, and then the execution section 22 changes the start phase based on the start resistance information. Thereby, the start phase can be optimized depending on the resistance to the start of the lean vehicle 1. Therefore, the safety of the lean vehicle 1 can be improved.

Preferably, in the control device 20, the execution section 22 changes whether the automatic start can be executed based on the start resistance information in the start phase. Thereby, it is possible to optimize whether automatic start can be executed in the start phase, depending on the resistance to the start of the lean vehicle 1. For example, when it is assumed that the vehicle body behavior or the rider of the lean vehicle 1 is likely to become unstable when automatic start is performed, automatic start can be prohibited. Therefore, the safety of the lean vehicle 1 can be improved.

Preferably, in the control device 20, the execution section 22 changes an acceleration characteristic of the lean vehicle 1 during the automatic start based on the start resistance information in the start phase. Thereby, the acceleration characteristic of the lean vehicle 1 during automatic start can be optimized depending on the resistance to the start of the lean vehicle 1. For example, when it is assumed that the vehicle body behavior or the rider of the lean vehicle 1 is likely to become unstable when automatic start is performed, at least one of the acceleration and the change rate in acceleration during automatic start can be reduced. Therefore, the safety of the lean vehicle 1 can be improved.

Preferably, in the control device 20, the execution section 22 changes whether a notification operation for notifying a rider of the lean vehicle 1 of the automatic start can be executed based on the start resistance information in the start phase. Thereby, it is possible to optimize whether the notification operation can be executed in the start phase, depending on the resistance to the start of the lean vehicle 1. For example, when it is assumed that the vehicle body behavior or the rider of the lean vehicle 1 will not become very unstable even when automatic start is performed, unnecessary notification operations can be suppressed. On the other hand, when it is assumed that the vehicle body behavior or the rider of the lean vehicle 1 is likely to become unstable when automatic start is performed, the notification operation can be permitted and executed. Therefore, the safety of the lean vehicle 1 can be improved.

Preferably, in the control device 20, the execution section 22 changes an execution aspect of a notification operation for notifying a rider of the lean vehicle 1 of the automatic start based on the start resistance information in the start phase. Thereby, the execution aspect of the notification operation in the start phase can be optimized depending on the resistance to the start of the lean vehicle 1. For example, when it is assumed that the vehicle body behavior or the rider of the lean vehicle 1 is likely to become unstable when automatic start is performed, the perceptibility of the notification operation can be increased. Therefore, the safety of the lean vehicle 1 can be improved.

Preferably, in the control device 20, the start resistance information includes vehicle body posture information of the lean vehicle 1. Thereby, the resistance to the start of the lean vehicle 1 can be appropriately determined based on the vehicle body posture information, so that the start phase can be appropriately optimized according to the resistance to the start of the lean vehicle 1.

Preferably, in the control device 20, the vehicle body posture information includes leaning state information on the lean vehicle 1. As a result, the resistance to the start of the lean vehicle 1 can be more appropriately determined based on the leaning state information, so that it is possible to more appropriately optimize the start phase according to the resistance to the start of the lean vehicle 1.

Preferably, in the control device 20, the leaning state information is acquired based on roll angle information of the lean vehicle 1. As a result, the leaning state information can be appropriately acquired, so that it is possible to more appropriately optimize the start phase according to the resistance to the start of the lean vehicle 1.

Preferably, in the control device 20, the leaning state information is acquired based on lateral acceleration information of the lean vehicle 1. As a result, the leaning state information can be appropriately acquired, so that it is possible to more appropriately optimize the start phase according to the resistance to the start of the lean vehicle 1.

Preferably, in the control device 20, the leaning state information is acquired based on steering angle information of the lean vehicle 1. As a result, the leaning state information can be appropriately acquired, so that it is possible to more appropriately optimize the start phase according to the resistance to the start of the lean vehicle 1.

Preferably, in the control device 20, the vehicle body posture information includes steering angle information of the lean vehicle 1. Thereby, for example, even when the lean vehicle 1 has not leaned in the roll direction, the resistance to the start of the lean vehicle 1 can be appropriately determined based on the steering angle information, so that it is possible to appropriately optimize the start phase depending on the resistance to the start of the lean vehicle 1.

Preferably, in the control device 20, the start resistance information includes riding state information of a rider of the lean vehicle 1. Thereby, the resistance to the start of the lean vehicle 1 can be appropriately determined based on the riding state information, so that the start phase can be appropriately optimized according to the resistance to the start of the lean vehicle 1.

Preferably, in the control device 20, the riding state information includes grip state information of the handlebar 2 of the lean vehicle 1 by the rider of the lean vehicle 1. Thereby, the resistance to the start of the lean vehicle 1 can be more appropriately determined based on the grip state information, so that it is possible to more appropriately optimize the start phase according to the resistance to the start of the lean vehicle 1.

Preferably, in the control device 20, the riding state information includes posture information of the rider of the lean vehicle 1. As a result, the resistance to the start of the lean vehicle 1 can be determined more appropriately based on the posture information, so that it is possible to more appropriately optimize the start phase according to the resistance to the start of the lean vehicle 1.

The invention is not limited to the description of the embodiment. For example, only part of the embodiment may be implemented.

### Reference Signs List

1: Lean vehicle
2: Handlebar
11: Engine
12: Hydraulic pressure control unit
13: Display device
14: Input device
15: Surrounding environment sensor
16: Inertial measurement unit
17: Grip force sensor
18: Steering angle sensor
19f: Front wheel speed sensor
19r: Rear wheel speed sensor
20: Control device
21: Acquisition section
22: Execution section

## Claims

1. A control device (20) that controls behavior of a lean vehicle (1), comprising:
an execution section (22) that executes a positional relationship adjustment operation that adjusts a positional relationship between the lean vehicle (1) and a target so that the positional relationship becomes a target positional relationship based on surrounding environment information of the lean vehicle (1), wherein
the execution section (22),
sequentially executes, in the positional relationship adjustment operation, a stop phase in which the lean vehicle (1) is automatically decelerated and stopped, and a start phase in which the lean vehicle (1) is caused to perform automatic start when a start trigger signal is acquired, and
changes the start phase based on start resistance information.

2. The control device according to claim 1, wherein
the execution section (22) changes whether the automatic start can be executed based on the start resistance information in the start phase.

3. The control device according to claim 1, wherein
the execution section (22) changes an acceleration characteristic of the lean vehicle (1) during the automatic start based on the start resistance information in the start phase.

4. The control device according to claim 1, wherein
the execution section (22) changes whether a notification operation for notifying a rider of the lean vehicle (1) of the automatic start can be executed based on the start resistance information in the start phase.

5. The control device according to claim 1, wherein
the execution section (22) changes an execution aspect of a notification operation for notifying a rider of the lean vehicle (1) of the automatic start based on the start resistance information in the start phase.

6. The control device according to any one of claims 1 to 5, wherein
the start resistance information includes vehicle body posture information of the lean vehicle (1).

7. The control device according to claim 6, wherein
the vehicle body posture information includes leaning state information on the lean vehicle (1).

8. The control device according to claim 7, wherein
the leaning state information is acquired based on roll angle information of the lean vehicle (1).

9. The control device according to claim 7, wherein
the leaning state information is acquired based on lateral acceleration information of the lean vehicle (1).

10. The control device according to claim 7, wherein
the leaning state information is acquired based on steering angle information of the lean vehicle (1).

11. The control device according to claim 6, wherein
the vehicle body posture information includes steering angle information of the lean vehicle (1).

12. The control device according to any one of claims 1 to 5, wherein
the start resistance information includes riding state information of a rider of the lean vehicle (1).

13. The control device according to claim 12, wherein
the riding state information includes grip state information of a handlebar (2) of the lean vehicle (1) by the rider.

14. The control device according to claim 12, wherein
the riding state information includes posture information of the rider.

15. A control method for controlling behavior of a lean vehicle (1), wherein:
an execution section (22) of a control device (20) executes a positional relationship adjustment operation that adjusts a positional relationship between the lean vehicle (1) and a target so that the positional relationship becomes a target positional relationship based on surrounding environment information of the lean vehicle (1); and
the execution section (22),
sequentially executes, in the positional relationship adjustment operation, a stop phase in which the lean vehicle (1) is automatically decelerated and stopped, and a start phase in which the lean vehicle (1) is caused to perform automatic start when a start trigger signal is acquired, and
changes the start phase based on start resistance information.
